# EUROPÄISCHE PATENTSCHRIFT

(11) **EP 1 939 478 B1**
(45) Veröffentlichungstag und Bekanntmachung des Hinweises auf die Patenterteilung: **18.04.2012**
(21) Anmeldenummer: 07020805.3
(22) Anmeldetag: 24.10.2007
(51) Int. Cl.: F16D 23/06

(54) **Schaltkupplung für Schalt-/Synchronisiereinrichtung, insbesondere für Schaltgetriebe eines Kraftfahrzeugs**
Clutch for clutch/synchronisation device, in particular for the manual gearbox of a motor vehicle
Embrayage principal pour dispositif de commutation/synchronisation, en particulier pour boîte de vitesses d'un véhicule automobile.

(30) Priorität: 26.10.2006 DE 102006050503
(43) Veröffentlichungstag der Anmeldung: 02.07.2008
(73) Patentinhaber: GM Global Technology Operations LLC, Detroit, MI 48265-3000 (US)
(72) Erfinder: Bönning, Jörg, 64285 Darmstadt (DE)
(74) Vertreter: Daniel, Ulrich W.P.

(56) Entgegenhaltungen:
- BE-A- 658 454
- DE-B- 1 199 143
- US-A- 3 367 462
- US-A- 3 537 558

## Beschreibung

Die vorliegende Erfindung liegt auf dem Gebiet der Fahrzeugtechnik und betrifft eine Schaltkupplung für eine Schalt-/Synchronisiereinrichtung, insbesondere für Schaltgetriebe eines Kraftfahrzeugs.

In Kraftfahrzeugen dienen Schaltgetriebe zum Übersetzen von Motordrehmomenten und Motordrehzahlen. Bei einem typischen Aufbau umfasst ein solches Schaltgetriebe eine mit dem Motor über eine Kupplung verbundene Antriebswelle, eine von der Antriebswelle angetriebene Vorgelegewelle und eine über wenigstens zwei Paare von miteinander kämmenden Zahnrädern mit der Vorgelegewelle gekoppelte Abtriebswelle, welche dem Antrieb der Räder dient.

Bei einem solchen Schaltgetriebe ist gewöhnlich ein erstes Zahnrad jedes Paars miteinander kämmender Zahnräder auf der Vorgelegewelle drehfest angebracht und das zweite Zahnrad jedes Paars als Schaltrad (Gangrad) an der Abtriebswelle drehbar gelagert. Jedem Schaltrad ist eine auf der Abtriebswelle angeordnete Schalt-/Synchronisiereinrichtung mit einer Schaltkupplung zugeordnet, durch welche das Schaltrad zwischen seinem drehbaren Zustand und einem bezüglich der Abtriebswelle drehfesten Zustand geschaltet werden kann.

Eine solche Schalt-/Synchronisiereinrichtung mit einer Schaltkupplung umfasst gewöhnlich einen Synchronring mit einer Sperrverzahnung und eine bezüglich der Abtriebswelle drehfeste, jedoch axial verschiebbare Schiebemuffe mit einer Innenverzahnung. Um das Schaltrad in den drehfesten Zustand zu schalten, wird die Schiebemuffe mit ihrer Innenverzahnung über eine als Gegenverzahnung ausgeführte Schaltverzahnung des Gangrads geschoben. Ein Verschieben der Schiebemuffe erfolgt mithilfe einer an der Schiebemuffe angreifenden Schaltgabel, die über einen Schaltmechanismus mit dem manuell oder automatisch betätigbaren Schalthebel gekoppelt ist.

In einem solchen Schaltgetriebe sind die Zahnradpaare ständig miteinander in Eingriff, jedoch kann ein Drehmoment zwischen der Vorgelegewelle und der Abtriebswelle nur über dasjenige Zahnradpaar übertragen werden, dessen Schaltrad mithilfe der Schalt-/Synchronisiereinrichtung bzw. der Schaltkupplung mit der Abtriebswelle drehfest verbunden ist.

Die Schalt-/Synchronisiereinrichtung dient zudem für eine Drehzahlangleichung zwischen dem Schaltrad und der auf der Abtriebswelle drehfest angeordneten Schiebemuffe, um den Einschaltvorgang zu erleichtern und um hierdurch einem verstärkten Verschleiß beim Schaltvorgang entgegen zu wirken.

Solange sich Schiebemuffe und Schaltrad mit unterschiedlicher Drehzahl drehen, entsteht über eine Reibungskupplung zwischen Schaltrad und Synchronring ein Reibmoment, das den Synchronring soweit verdreht, dass dessen Sperrzähne vor den Zähnen der Schaltverzahnung der Schiebemuffe liegen und damit das Verschieben der Schiebemuffe verhindern. Nach Herstellen von Gleichlauf, wenn also keine durch das Reibmoment zwischen Synchronring und Schaltrad erzeugte Umfangskraft mehr auf den Synchronring wirkt, kann die Schiebemuffe auf die Schaltverzahnung des Schaltrads geschoben werden. Zum Durchschalten der Schiebemuffe muss die Sperrposition des Synchronrings aufgehoben und im Allgemeinen auch noch die Drehlage des Schaltrads korrigiert werden. Zu diesem Zweck sind Anschrägungen an den Stirnseiten der Zähne der Schaltverzahnung der Schiebemuffe, der Sperrzähne des Synchronringes und der Zähne der Schaltverzahnung des Schaltrads ausgebildet.

Zum Schalten des Gangrads müssen die Zähne der Innenverzahnung der Schiebemuffe zunächst durch die Lücken der Sperrverzahnung des Synchronrings gleiten und anschließend in die Lücken der Schaltverzahnung des Schaltrads greifen, um so Formschluss zwischen Schiebemuffe und Schaltrad herzustellen.

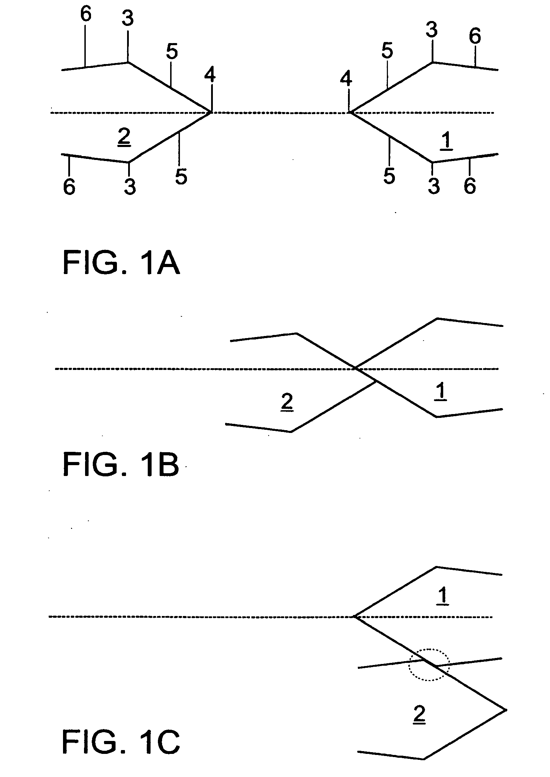

Um dies näher zu erläutern, wird nun Bezug auf die Figuren 1A bis 1C genommen, worin schematische Ansichten eines Axialschnitts (radiale Blickrichtung) eines Zahns der Innenverzahnung einer Schiebemuffe und eines Zahns der Schaltverzahnung eines Schaltrads einer herkömmlichen Schaltkupplung beim Schaltvorgang dargestellt sind.

Figur 1A zeigt einen Zahn 1 der Schaltverzahnung des Schaltrads und einen Zahn 2 der Innenverzahnung der Schiebemuffe im gelösten Zustand. Jeder Zahn umfasst ebene (nichtgekrümmte) Schrägflächen 5 (Dachflächen), die sich jeweils zwischen einem Dachfirst 4 und einer Dachkante 3 erstrecken. An den Dachkanten 3 gehen die Dachflächen 5 jeweils in Zahnflanken 6 über. Die schrägen Dachflächen 5 der Zähne erleichtern ein Ineinandergleichen der beiden Verzahnungen.

Die Figuren 1B und 1C zeigen demgegenüber spätere Situationen während des Schaltvorgangs, bei denen die Zähne 2 der Innenverzahnung der Schiebemuffe, nach Herstellen von Gleichlauf zwischen Schiebemuffe und Schaltrad, bereits durch (die in Fig. 1 nicht dargestellte) Sperrverzahnung des Synchronrings hindurch geglitten sind und ein Ineinandergleiten zwischen der Innenverzahnung der Schiebemuffe und der Schaltverzahnung des Schaltrads einsetzt.

Beim Schaltvorgang tritt der Effekt auf, dass während des Durchgleitens der Zähne der Schiebemuffe durch die Lücken der Sperrverzahnung des Synchronrings, aufgrund des bereits gelösten Reibschlusses zwischen Synchronring und Schaltrad und aufgrund von abtriebswellenseitigen Reibungsverlusten ("Schleppmoment") eine Drehzahldifferenz zwischen Schiebemuffe und Schaltrad auftreten kann. Dies hat zur Folge, dass die Zähne 2 der Innenverzahnung der Schiebemuffe und die Zähne 1 der Schaltverzahnung des Schaltrads vor allem im Bereich der Dachkanten 3 aufeinander schlagen können, was in nachteiliger Weise zu erhöhtem Verschleiß des Schaltrads führt.

Zudem tritt der folgende weitere Effekt auf: Gleitet beim Schaltvorgang ein Zahn 2 der Innenverzahnung der Schiebemuffe an einem Zahn 1 der Schaltverzahnung des Schaltrads ab, so muss die zunächst schräge Vorwärtsbewegung von Zahn 2 beim Passieren der Dachkante 3 von Zahn 1 in eine gerade Vorwärtsbewegung überführt werden, wodurch jedoch für Zahn 2 die Wahrscheinlichkeit steigt, auf die schräge Dachfläche 5 beziehungsweise Dachkante 3 eines zu Zahn 1 benachbarten Zahns der Schaltverzahnung (in Fig. 1 nicht dargestellt) aufzuprallen. Hierdurch kann ein Hin- und Herschlagen von Zahn 2 innerhalb der Lücke von zwei benachbarten Zähnen 1 der Schaltverzahnung des Schaltrads auftreten ("Upshift-Clash"), welches zu erhöhtem Verschleiß führt ("Aufschaltkratzen"). Eine Vergrößerung des Abstands von Zähnen der Schaltverzahnung ist jedoch nur bedingt möglich.

Weiterhin tritt der folgende Effekt auf: Gleitet beim Schaltvorgang ein Zahn 2 der Innenverzahnung der Schiebemuffe an einem Zahn 1 der Schaltverzahnung des Schaltrads ab, so erfahren Schiebemuffe und Schaltrad aufgrund der räumlichen Anordnung auf einem Kreisbogen in Umfangsrichtung eine relative Verdrehung um eine Zahnbreite. Durch das Verdrehen sind die Dachflächen jedoch räumlich nicht mehr in planparalleler Position zueinander und es kommt zu einem Kontakt zwischen der Dachkante 3 von Zahn 2 der Innenverzahnung und der Dachfläche 5 von Zahn 1 der Schaltverzahnung des Schaltrads. Dieser Kontakt stört den Schaltablauf und den (Ein-)Schaltvorgang erheblich und es kann zu Schaltschwierigkeiten kommen.

In Fig. 1C ist jener Bereich mit einem strichlierten Kreis gekennzeichnet, der für ein glattes Einschalten der Schiebemuffe in das Schaltrad ausschlaggebend und zudem verschleißgefährdet ist.

Eine Schaltkupplung mit den Merkmalen des Oberbegriffs von Patentanspruch 1 ist jeweils aus den folgenden Druckschriften bekannt: BE 658454 A, US 3367462A, US 3537558 A, DE 1199143 B.

Aufgabe der Erfindung ist es, eine Schaltkupplung für eine Schalt-/Synchronisiereinrichtung anzugeben, mit der der zuvor dargestellte Nachteil vermieden werden kann. So soll mit der erfindungsgemäßen Schaltkupplung erhöhtem Verschleiß des Schaltrads aufgrund eines Aufeinanderschlagens der Verzahnungen von Schiebemuffe und Schaltrad entgegen gewirkt und das Einschaltverhalten verbessert werden.

Diese Aufgabe wird nach dem Vorschlag der Erfindung durch eine Schaltkupplung mit den Merkmalen des unabhängigen Anspruchs gelöst. Vorteilhafte Ausgestaltungen der Erfindung sind durch die Merkmale der Unteransprüche angegeben.

Erfindungsgemäß ist eine Schaltkupplung für eine Schalt-/Synchronisiereinrichtung, insbesondere für ein Schaltgetriebe eines Kraftfahrzeugs, gezeigt.

Die erfindungsgemäße Schaltkupplung umfasst mindestens ein auf einer Welle drehbar gelagertes und mit einer Schaltverzahnung versehenes Schaltrad. Weiterhin umfasst sie eine drehfest auf der Welle angeordnete und mit einer Schaltverzahnung (Gegenverzahnung der Schaltverzahnung des Schaltrads) versehene Schiebemuffe, die beim Synchronisieren in Eingriff mit der auf dem Schaltrad vorgesehenen Schaltverzahnung bringbar ist. Vorteilhaft ist mindestens ein zwischen Schiebemuffe und Schaltrad angeordneter Synchronring vorgesehen, der zur Angleichung der Drehzahlen von Schiebemuffe und Schaltrad dient.

Die Schiebemuffe ist beispielsweise über eine Führungsnabe drehfest mit der Welle verbunden, jedoch in axialer Richtung verschiebbar, so dass das Schaltrad durch axiales Verschieben der Schiebemuffe drehfest mit der Welle verbunden werden kann, um so ein das Schaltrad enthaltendes Zahnradpaar in den Kraftfluss ein- bzw. auszuschalten.

Der optional vorgesehene Synchronisierring ist mit einer Sperrverzahnung mit Sperrzähnen versehen, die eine Gegenverzahnung zur Innenverzahnung der Schiebemuffe ist. Der Synchronisierring steht mit der Schiebemuffe in Umfangsrichtung in formschlüssiger, jedoch um eine halbe Zahnteilung der Sperrverzahnung verdrehbarer Verbindung und kann durch axiales Verschieben in eine reibschlüssige Verbindung mit dem Schaltrad gebracht werden. Aufgrund der reibschlüssigen Verbindung mit dem Schaltrad wird der Synchronring bei unterschiedlichen Drehzahlen zwischen Schiebemuffe und Schaltrad gegenüber der Schiebemuffe so verdreht, dass seine Sperrverzahnung ein Verschieben der Innenverzahnung auf die Schaltverzahnung des Schaltrads verhindert.

Im Vorstehenden und Folgenden beziehen sich die Angaben "axial", "radial" und "in Umfangsrichtung" jeweils auf die Wellenachse der die Schiebemuffe und das Schaltrad tragenden Welle.

Jeder Zahn der Innenverzahnung der Schiebemuffe ist aus einem mit der Schiebemuffe (unmittelbar) verbundenen Flankenabschnitt und einem sich an den Flankenabschnitt axial stirnseitig anschließenden Dachabschnitt aufgebaut. Der Dachabschnitt ist mit angeschrägten Dachflächen versehen, die sich auf der axialen Stirnseite des Zahns befinden. Die angeschrägten Dachflächen münden in einen den Dachflächen gemeinsamen Dachfirst, welcher sich insbesondere in einer radialen Richtung (senkrecht zur Wellenachse) erstrecken kann. Die angeschrägten Dachflächen der Zähne der Innenverzahnung der Schiebemuffe sind zum Schaltrad hin gerichtet.

Jeder Zahn der Schaltverzahnung des Schaltrads ist aus einem mit dem Schaltrad verbundenen Flankenabschnitt und einem sich an den Flankenabschnitt axial stirnseitig anschließenden Dachabschnitt aufgebaut. Der Dachabschnitt ist mit angeschrägten Dachflächen versehen, die sich auf der axialen Stirnseite des Zahns befinden. Die angeschrägten Dachflächen münden in einen den Dachflächen gemeinsamen Dachfirst, welcher sich insbesondere in einer radialen Richtung (senkrecht zur Wellenachse) erstrecken kann. Die angeschrägten Dachflächen der Zähne der Schaltverzahnung des Schaltrads sind zur Schiebemuffe hin gerichtet. Somit sind die Dachflächen der Zähne der Schiebemuffe und des Schaltrads zueinander gerichtet, um so ein Ineinandergleiten der beiden Verzahnungen zu erleichtern.

Jeder Zahn der Sperrverzahnung des Synchronrings ist aus einem mit dem Synchronring verbundenen Flankenabschnitt und einem sich an den Flankenabschnitt axial stirnseitig anschließenden Dachabschnitt aufgebaut. Der Dachabschnitt ist mit angeschrägten Dachflächen versehen, die sich auf der axialen Stirnseite des Zahns befinden. Die angeschrägten Dachflächen münden in einen den Dachflächen gemeinsamen Dachfirst, welcher sich insbesondere in einer radialen Richtung (senkrecht zur Wellenachse) erstrecken kann. Die angeschrägten Dachflächen der Zähne der Sperrverzahnung des Synchronrings sind zur Schiebemuffe hin gerichtet. Somit sind die Dachflächen der Zähne der Schiebemuffe und des Synchronrings zueinander gerichtet, um so ein Ineinandergleiten der beiden Verzahnungen zu erleichtern.

Bei den Zähnen der Innenverzahnung der Schiebemuffe, der Sperrverzahnung des Synchronrings und der Schaltverzahnung des Schaltrads definiert jeweils eine axiale Abmessung des Zahns eine "Zahnhöhe", während eine Abmessung des Zahns senkrecht zur Zahnhöhe und senkrecht zu einer radialen Richtung (also in Umfangsrichtung) eine "Zahnbreite" bzw. "Zahndicke" definiert. Axial zum Dachfirst hin verjüngt sich demnach die Zahndicke bei jedem Zahn im Bereich des Dachabschnitts aufgrund der angeschrägten Dachflächen.

Die erfindungsgemäße Schaltkupplung zeichnet sich in wesentlicher Weise dadurch aus, dass die Dachflächen eines jeden Zahns der Schaltverzahnung des Schaltrads jeweils wenigstens in einem Dachflächenabschnitt einer Dachfläche (räumlich) ballig ausgebildet sind. Anders ausgedrückt, umfasst jede Dachfläche eines Zahns der Schaltverzahnung des Schaltrads wenigstens einen (räumlich) ballig ausgebildeten Dachflächenabschnitt.

Durch die erfindungsgemäße Gestaltung der Dachflächen der Zähne der Schaltverzahnung des Schaltrads kann in vorteilhafter Weise ein verbessertes Überschieben der Innenverzahnung der Schiebemuffe über die Schaltverzahnung des Schaltrads bei stark verminderten Verschleißerscheinungen erreicht werden. Genauer ausgedrückt, ermöglicht die Erfindung beim Schaltvorgang ein der balligen Kontur der Zähne der Schaltverzahnung folgendes Abgleiten der Zähne der Innenverzahnung und der Zähne der Schaltverzahnung in einem weichen Bogen ohne abrupte oder plötzliche Richtungsänderung an einer "Dachkante", wodurch die Wahrscheinlichkeit für ein Hin- und Herschlagen der Zähne der Innenverzahnung der Schiebemuffe innerhalb der Lücken der Schaltverzahnung des Schaltrads verringert wird. Zudem wird durch den räumlich balligen Dachflächenabschnitt der Kontakt der Zähne der Innenverzahnung der Schiebemuffe und der Schaltverzahnung des Schaltrads auf den Bereich maximaler Zahndicke beschränkt und ein Kantenkontakt, wie im herkömmlichen Fall, wird vermieden.

Bei einer vorteilhaften Ausgestaltung der erfindungsgemäßen Schaltkupplung sind, neben den balligen Dachflächenabschnitten der Zähne der Schaltverzahnung des Schaltrads, auch die Dachflächen der Zähne der Sperrverzahnung des Synchronrings jeweils wenigstens in einem Dachflächenabschnitt ballig geformt. Hierdurch kann in vorteilhafter Weise ein erleichtertes Überschieben der Innenverzahnung der Schiebemuffe über die Sperrverzahnung des Synchronrings erreicht werden.

Erfindungsgemäß sind die balligen Dachflächenabschnitte der Zähne der Verzahnungen von Schaltrad, und gegebenenfalls Synchronring, in Form von kantenlos in die Zahnflanken übergehenden Ellipsenausschnitten ausgebildet. Genauer sind die balligen Dachflächenabschnitte in Schnittebenen, welche parallel zur Axialenrichtung und senkrecht zur Radialenrichtung liegen, in Form von Ellipsenausschnitten geformt. Hierbei wird in dem elliptischen Dachflächenabschnitt der Kontakt der Zähne von Innenverzahnung der Schiebemuffe und Schaltverzahnung des Schaltrads auf das Ellipsenmaximum beschränkt und ein Kantenkontakt, wie im herkömmlichen Fall, wird vermieden.

Erfindungsgemäß gehen die balligen, insbesondere ellipsenförmigen Dachflächenabschnitte in Richtung zum Dachfirst hin jeweils in ebene (nichtgekrümmte) Dachflächenabschnitte der Dachflächen kantenlos über, welche ihrerseits insbesondere bis hin zum Dachfirst reichen können.

Bei einer weiteren vorteilhaften Ausgestaltung der erfindungsgemäßen Schaltkupplung verjüngen sich die Zähne der Verzahnungen jeweils im Bereich des Zahnflankenabschnitts axial in Richtung von dem Dachfirst weg. Durch diese Hinterschneidung (Hinterlegung) der Zähne kann ein unbeabsichtiges Lösen der Schaltkupplung im gekuppelten Zustand vermieden werden.

Bei einer weiteren vorteilhaften Ausgestaltung der erfindungsgemäßen Schaltkupplung weisen die Zähne der Innenverzahnung der Schiebemuffe ebene Dachflächen auf.

Die Erfindung erstreckt sich ferner auf ein Schaltrad einer wie oben beschriebenen erfindungsgemäßen Schaltkupplung, insbesondere für ein Schaltgetriebe eines Kraftfahrzeugs.

Des Weiteren erstreckt sich die Erfindung auf eine Schalt-/Synchronisiereinrichtung, insbesondere eines Schaltgetriebes eines Kraftfahrzeugs, mit einer wie oben beschriebenen Schaltkupplung.

Darüber hinaus erstreckt sich die Erfindung auf ein Schaltgetriebe eines Kraftfahrzeugs mit einer Antriebswelle und einer Abtriebswelle, sowie mit wenigstens einem zwischen den beiden Wellen angeordneten, die beiden Wellen verbindenden, kämmenden Räderpaar, durch welche der Kraftfluss zwischen Antriebs- und Abtriebswelle an- und abgeschaltet werden kann, wobei in dem Räderpaar ein Rad als Schaltrad mit einer wie oben beschriebenen Schaltkupplung schaltbar ist.

Die Erfindung wird nun anhand eines Ausführungsbeispiels näher erläutert, wobei Bezug auf die beigefügten Figuren genommen wird. Gleiche beziehungsweise gleichwirkende Elemente sind in den Figuren mit den gleichen Bezugszahlen bezeichnet. Es zeigen:
- Fig. 1A bis Fig. 1C: schematische Ansichten eines Axialschnitts von Zähnen von Schiebemuffe und Schaltrad einer herkömmlichen Schaltkupplung beim Schaltvorgang;
- Fig. 2: eine schematische radiale Schnittdarstellung einer Schaltkupplung eines erfindungsgemäßen Schaltgetriebes, insbesondere eines Kraftfahrzeugs;
- Fig. 3: eine schematische Ansicht eines Axialschnitts eines Zahns des Schaltrads der erfindungsgemäßen Schaltkupplung von Fig. 2;
- Fig. 4A bis Fig. 4C: schematische Ansichten eines Axialschnitts von Zähnen von Schiebemuffe und Schaltrad der erfindungsgemäßen Schaltkupplung von Fig. 2 beim Schaltvorgang.

Die Figuren 1A bis 1C wurden bereits eingangs erläutert, so dass sich hier eine weitere Erklärung erübrigt.

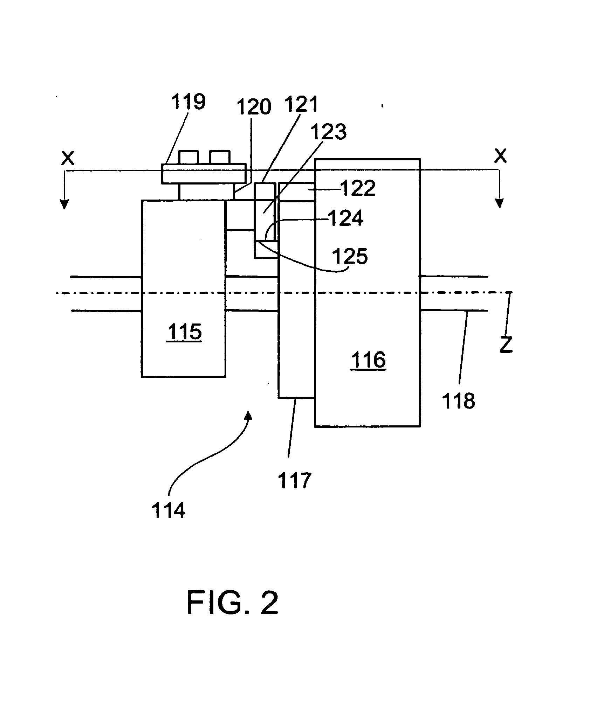

Es wird nun Bezug auf Fig. 2 genommen, worin eine schematische radiale Schnittdarstellung eines Ausführungsbeispiels für eine erfindungsgemäße Schaltkupplung eines Schaltgetriebes, insbesondere eines Kraftfahrzeugs gezeigt ist.

Demnach umfasst eine insgesamt mit der Bezugszahl 114 bezeichnete Schaltkupplung ein drehbar auf einer Welle 118 (beispielsweise Abtriebswelle) gelagertes, zu schaltendes Schaltrad 116 (beispielsweise Gangrad) mit einem Kupplungskörper 117 und einer daran geformten Schaltverzahnung 122. Die Welle 118 ist um die Wellenachse Z drehbar.

Die Schaltkupplung ist Teil einer Schalt-/Synchronisiereinrichtung, welche weiterhin eine auf einer Führungsnabe 115 gelagerte Schiebemuffe 119 und einen Synchronring 123 umfasst. Die Führungsnabe 115 ist drehfest auf der Welle 118 gelagert. Die mit einer Innenverzahnung 120 versehene Schiebemuffe 119 ist in axialer Richtung entlang der Wellenachse Z verschiebbar. Die Innenverzahnung 120 der Schiebemuffe 119 ist eine Gegenverzahnung zur Schaltverzahnung 122 des Schaltrads 116. Der mit einer Sperrverzahnung 121 versehene und von der Führungsnabe 115 geführte Synchronring 123 ist in axialer Richtung, d. h. entlang der Wellenachse Z, verschiebbar. Die Sperrverzahnung 121 ist so ausgebildet, dass sie ein Hindurchgleiten der Innenverzahnung 120 der Schiebemuffe 119 ermöglicht. Beim Synchronisieren kann die Innenverzahnung 120 der Schiebemuffe 119 in Eingriff mit der Schaltverzahnung 122 des Schaltrads 116 gebracht werden, um so einen Formschluss zwischen Schiebemuffe 119 und Schaltrad 116 herzustellen.

Zur Angleichung der Drehzahlen von Schiebemuffe 119 und Schaltrad 116 sind der Synchronring 123 und der Kupplungskörper 117 des Schaltrads 116 jeweils mit Reibflächen 124, 125 versehen, durch welche ein Reibmoment zwischen diesen aufgebaut werden kann. Gewöhnlich sind die Reibflächen 124, 125 konische (kegelförmige) Passflächen, was in Fig. 2 nicht näher dargestellt ist.

Der Synchronring 123 ist gegenüber der Führungsnabe 115 beziehungsweise der Schiebemuffe 119 in beide Drehrichtungen um die Wellenachse Z um die Teilung eines halben Zahns der Sperrverzahnung 121 verdrehbar.

Beim Schaltvorgang wird das Schaltrad 116 über die Schiebemuffe 119 und die drehfest mit der Welle 118 verbundene Führungsnabe 115 drehfest mit der Welle 118 verbunden. Zu diesem Zweck wird die Schiebemuffe 119 mittels einer in Fig. 2 nicht dargestellten, an der Schiebemuffe 119 angreifenden Schaltgabel in axialer Richtung zum Schaltrad 116 hin verschoben. Hierbei wird auch der Synchronring 123 mitgenommen, bis die konischen Reibflächen 124, 125 von Synchronring 123 und Kupplungskörper 117 einander anliegen.

Liegt zwischen dem Schaltrad 116 und der Schiebemuffe 119, beziehungsweise der Welle 118, keine Drehzahldifferenz vor, kann die Innenverzahnung 120 der Schiebemuffe 119 über die Sperrverzahnung 121 des Synchronrings 123 gleiten und in die Schaltverzahnung 122 des Schaltrads 116 greifen, wodurch der Schaltvorgang beendet ist.

Liegt andererseits zwischen dem Schaltrad 116 und der Schiebemuffe 119, beziehungsweise der Welle 118 eine Drehzahldifferenz vor, wird der Synchronring 123 durch die Reibung zwischen den Reibflächen 124, 125 mitgenommen und um eine halbe Zahnteilung der Sperrverzahnung 121 gegenüber der Schiebemuffe 119 verdreht, so dass die Sperrzähne der Sperrverzahnung 121 den Zähnen der Innenverzahnung 120 der Schiebemuffe 119 den Weg versperren. Erst wenn Gleichlauf zwischen Schiebemuffe 119 und Schaltrad 116 vorliegt, können die Zähne der Innenverzahnung 120 der Schiebemuffe 119 durch die Lücken der Sperrzähne der Sperrverzahnung 121 hindurchgleiten und in Eingriff mit der Schaltverzahnung 122 des Schaltrads 116 gelangen.

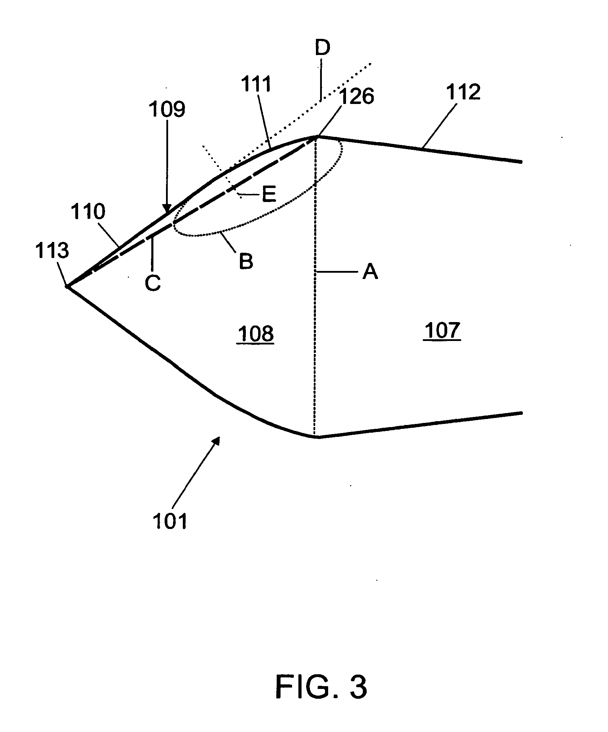

Es wird nun Bezug auf Fig. 3 genommen, worin eine schematische Ansicht eines Axialschnitts (radiale Blickrichtung) eines Zahns der Schaltverzahnung 122 des Schaltrads 116 der erfindungsgemäßen Schaltkupplung 114 von Fig. 1 gemäß dem in Fig. 1 angegebenen Schnitt X-X gezeigt ist.

Demnach ist jeder insgesamt mit der Bezugszahl 101 bezeichnete Zahn der Schaltverzahnung 122 des Schaltrads 116 aus einem am Kopplungskörper 117 direkt angebrachten Flankenabschnitt 107 und einem eine axiale Stirnseite des Zahns formenden Dachabschnitt 108 aufgebaut, welche durch die (gedachte) Hilfslinie (Hilfsebene) A getrennt werden. Die Außenflächen des Dachabschnitts 108 formen schräge Dachflächen 109, die Außenflächen des Flankenabschnitts 107 formen Flanken 112. Die schrägen Dachflächen 109 münden in einen Dachfirst 113.

Jede Dachfläche 109 ist aus zwei verschiedenen Dachflächenabschnitten 110, 111 aufgebaut, nämlich einem ebenen (nichtgekrümmten) Dachflächenabschnitt 110, welcher sich vom Dachfirst 113 bis zur einer Hilfslinie (Hilfsebene) E erstreckt, und einem elliptisch geformten Dachflächenabschnitt 111, welcher sich von der Hilfslinie (Hilfsebene) E bis zum Beginn der Flanke 112 erstreckt. Die als Hilfslinie (Hilfsebene) eingezeichnete Gerade D stellt eine Verlängerung des nichtgekrümmten Dachflächenabschnitts 110 dar und macht die Stelle erkennbar, wo der nichtgekrümmte Dachflächenabschnitt 110 in den elliptisch gekrümmten Dachflächenabschnitt 111 übergeht.

Weiterhin ist in Fig. 3 eine Ellipse B eingezeichnet, welche erkennbar macht, dass der Dachflächenabschnitt 111 durch einen Ellipsenabschnitt geformt ist. Der elliptisch geformte Dachflächenabschnitt 111 geht kantenlos in die Flanke 112 über.

Zum Vergleich ist eine herkömmliche, schräge Dachfläche C strichliert eingezeichnet, welche im Unterschied zur erfindungsgemäßen Gestaltung des Zahns am Übergang vom Dachabschnitt 108 zum Flankenabschnitt 107 eine Kante 126 formt.

Der Flankenabschnitt 107 verjüngt sich in axialer Richtung weg vom Dachfirst 113, wodurch ein unabsichtliches Lösen der beiden Verzahnungen verhindert werden kann.

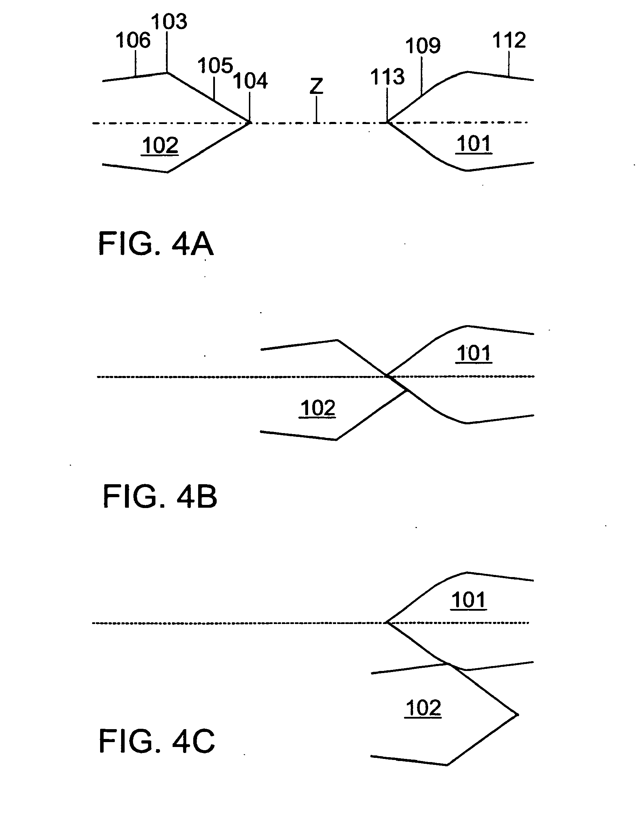

Es wird nun Bezug auf die Figuren 4A bis 4C genommen, worin in schematischen Ansichten eines Axialschnitts gemäß Schnitt X-X von Fig. 1 die Zähne der Innenverzahnung 120 der Schiebemuffe 119 und der Schaltverzahnung 122 des Schaltrads 116 der erfindungsgemäßen Schaltkupplung beim Schaltvorgang dargestellt sind.

Die Zähne der Schaltverzahnung 122 des Schaltrads 116 und auch die Zähne der Sperrverzahnung 121 des Synchronrings 123 sind in der in Fig. 3 gezeigten Weise geformt. Um unnötige Wiederholungen zu vermeiden, wird auf die zu Fig. 3 gemachten Ausführungen Bezug genommen.

Die Zähne 102 der Innenverzahnung 120 der Schiebemuffe 119 weisen ebene (nichtgekrümmte) Dachflächen 105 auf, welche von einem Dachfirst 104 an einer Kante 103 in die Flanken 106 übergehen.

Fig. 4A zeigt eine Situation im gelösten Zustand. Die Figuren 4B und 4C zeigen demgegenüber spätere Situationen, bei denen die Zähne 102 der Innenverzahnung 120 der Schiebemuffe 119, nach Herstellen von Gleichlauf zwischen Schiebemuffe 119 und Schaltrad 116, bereits durch die Sperrverzahnung 121 des Synchronrings 123 hindurchgeglitten sind, und ein Ineinandergleiten zwischen der Innenverzahnung 120 der Schiebemuffe 119 und der Schaltverzahnung 122 des Schaltrads 116 einsetzt.

Aufgrund der ebenen Form der Dachflächenabschnitte 110 der Dachflächen 109 der Zähne 101 der Schaltverzahnung 122 des Schaltrads 116 und der ebenen Form der Dachflächen 105 der Zähne 102 der Innenverzahnung 120 der Schiebemuffe 119 ist ein Ineinandergleiten der Verzahnungen von Schiebemuffe 119 und Schaltrad 116 erleichtert. Wenn das Schaltrad 116 beim Hindurchgleiten der Innenverzahnung 120 der Schiebemuffe 119 durch die Sperrverzahnung 121 des Synchronrings 123 aufgrund des gelösten Reibschlusses zwischen Synchronring 123 und Schaltrad 116 wieder Fahrt aufnimmt, wird ein erhöhter Verschleiß der Schaltverzahnung 122 des Schaltrads 116 aufgrund der ellipsenförmigen Gestaltung der Dachflächenabschnitte 111 der Zähne 101 und des kantenlosen Übergangs der ellipsenförmigen Dachflächenabschnitte 111 in die Flanken 112 der Zähne 101 weitestgehend vermieden. Zudem wird Ineinandergleiten der beiden Verzahnungen erleichtert.

### Bezugszeichenliste

- 1: Zahn Schaltverzahnung Schaltrad
- 2: Zahn Innenverzahnung Schiebemuffe
- 3: Kante
- 4: Dachfirst
- 5: Dachfläche
- 6: Flanke
- 101: Zahn Schaltverzahnung Schaltrad
- 102: Zahn Innenverzahnung Schiebemuffe
- 103: Dachkante
- 104: Dachfirst
- 105: Dachfläche
- 106: Flanke
- 107: Flankenabschnitt
- 108: Dachabschnitt
- 109: Dachfläche
- 110: ebener Dachflächenabschnitt
- 111: elliptischer Dachflächenabschnitt
- 112: Flanke
- 113: Dachfirst
- 114: Schaltkupplung
- 115: Führungsnabe
- 116: Schaltrad
- 117: Kupplungskörper
- 118: Welle
- 119: Schiebemuffe
- 120: Innenverzahnung
- 121: Sperrverzahnung
- 122: Schaltverzahnung
- 123: Synchronring
- 124: Reibfläche
- 125: Reibfläche
- 126: Kante

## Patentansprüche

1. Schaltkupplung (114) für Schalt-/Synchronisiereinrichtung, insbesondere eines Schaltgetriebes eines Kraftfahrzeugs, mit mindestens einem auf einer Welle (118) um eine Achse (Z) drehbar gelagerten und mit einer Schaltverzahnung (122) versehenen Schaltrad (116), einer drehfest auf der Welle (118) angeordneten und mit einer Innenverzahnung (120) versehenen Schiebemuffe (119), die in Eingriff mit der auf dem Schaltrad (116) vorgesehenen Schaltverzahnung (122) bringbar ist, wobei die Zähne der Innenverzahnung (120) der Schiebemuffe (119) sowie der Schaltverzahnung (122) des Schaltrads (116) mit gegeneinander gerichteten Dachflächen (105, 109) versehen sind, die sich jeweils zwischen einem Dachflächenfirst (104, 113) und einer Zahnflanke (106, 112) erstrecken, wobei die Dachflächen (109) der Zähne der Schaltverzahnung (122) des Schaltrads (116) jeweils wenigstens in einem Dachflächenabschnitt (111) ballig geformt sind, **dadurch gekennzeichnet, dass** die ballig geformten Dachflächenabschnitte (111) in Form von kantenlos in die Zahnflanken (112) übergehenden Ellipsenausschnitten ausgebildet sind und in Richtung zum Dachfirst (113) hin jeweils in ebene Dachflächenabschnitte (110) kantenlos übergehen.

2. Schaltkupplung nach Anspruch 1, welche mit mindestens einem zwischen Schiebemuffe (119) und Schaltrad (116) angeordneten und mit einer Sperrverzahnung (121) versehenen Synchronring (123) zur Angleichung der Drehzahlen von Schiebemuffe (119) und Schaltrad (116) versehen ist, **dadurch gekennzeichnet, dass** die Dachflächen der Zähne der Sperrverzahnung (121) des Synchronrings (123) jeweils wenigstens in einem Dachflächenabschnitt ballig geformt sind.

3. Schaltkupplung nach einem der Ansprüche 1 bis 2, **dadurch gekennzeichnet, dass** die Zähne (102) der Innenverzahnung (120) der Schiebemuffe (119) ebene Dachflächen (105) aufweisen.

4. Schaltkupplung nach einem der Ansprüche 1 bis 3, **dadurch gekennzeichnet, dass** sich die Zähne (101) der Schaltverzahnung (122) des Schaltrads (116) im Bereich der Zahnflanken (112) axial in Richtung vom Dachfirst (113) weg verjüngen.

5. Schaltrad (116) einer Schaltkupplung (114) nach einem der Ansprüche 1 bis 4, **dadurch gekennzeichnet, dass** die Dachflächen (109) der Zähne der Schaltverzahnung (122) des Schaltrads (116) jeweils wenigstens in einem Dachflächenabschnitt (111) ballig geformt sind.

6. Schalt-/Synchronisiereinrichtung, insbesondere eines Schaltgetriebes eines Kraftfahrzeugs, mit einer Schaltkupplung nach einem der Ansprüche 1 bis 5.

7. Schaltgetriebe eines Kraftfahrzeugs mit einer Antriebswelle und einer Abtriebswelle, sowie mit wenigstens einem zwischen den beiden Wellen angeordneten, kämmenden Räderpaar, wobei ein Rad des Räderpaars als Schaltrad mit einer Schaltkupplung nach einem der Ansprüche 1 bis 4 schaltbar ist.

## Claims

1. A shifting clutch (114) for a shifting/synchronizing device, especially a transmission of a motor vehicle, comprising a change gear (116) which is rotatably mounted about an axis (Z) on a shaft (118) and is provided with a change gearing (122), a sliding coupling (119) which is arranged on the shaft (118) in a torque-proof manner and is provided with an internal gearing (120) and can be brought into engagement with the change gearing (122) provided on the change gear (116), with the teeth of the internal gearing (120) of the sliding coupling (119) and the change gearing (122) of the change gear (116) being provided with roof areas (105, 109) which face each other and which respectively extend between a roof area ridge (104, 113) and a tooth flank (106, 112), with the roof areas (109) of the teeth of the change gearing (122) of the change gear (116) being formed in a crowned manner at least in one roof area section (111), **characterized in that** the crown-shaped roof area sections (111) are arranged as ellipse sections which converge without edges into the tooth flanks (112) and converge without edges in the direction towards the roof ridge (113) into respectively flat roof area sections (110).

2. A shifting clutch according to claim 1, which is provided with at least one synchronized disk (123) arranged between the sliding coupling (119) and the change gear (116) and provided with a locking gearing (121) for adjusting the speeds of sliding coupling (119) and change gear (116), **characterized in that** the roof areas of the teeth of the locking gearing (121) of the synchronized disk (123) are respectively formed in a crown-shaped manner in at least one roof area section.

3. A shifting clutch according to one of the claims 1 to 2, **characterized in that** the teeth (102) of the internal gearing (120) of the sliding coupling (119) have flat roof areas (105).

4. A shifting clutch according to one of the claims 1 to 3, **characterized in that** the teeth (101) of the change gearing (122) of the change gear (116) taper axially in the direction away from the roof ridge (113) in the region of the tooth flanks (112).

5. A change gear (116) of a shifting clutch (114) according to one of the claims 1 to 4, **characterized in that** the roof areas (109) of the teeth of the change gearing (122) of the change gear (116) are respectively formed in a crown-shaped manner at least in one roof area section (111).

6. A shifting/synchronizing device, especially a transmission of a motor vehicle, comprising a shifting clutch according to one of the claims 1 to 5.

7. A transmission of a motor vehicle with a drive shaft and an output shaft, and with at least one meshing pair of gears arranged between the two shafts, with one gear of the pair of gears being shiftable as a change gear with a shifting clutch according to one of the claims 1 to 4.

## Revendications

1. Embrayage (114) pour dispositif de changement de vitesses/de synchronisation, en particulier pour une boîte de vitesses d'un véhicule à moteur, avec au moins une roue d'embrayage (116) supportée sur un arbre (118) avec possibilité de rotation autour d'un axe (Z) et munie d'une denture d'embrayage (122), avec un manchon coulissant (119) disposé de façon solidaire en rotation sur l'arbre (118) et muni d'une denture interne (120), qui peut être mis en prise avec la denture d'embrayage (122) prévue sur la roue d'embrayage (116), les dents de la denture interne (120) du manchon coulissant (119) et de la denture d'embrayage (122) de la roue d'embrayage (116) étant munies de surfaces en pan de toit (105, 109) tournées l'une vers l'autre, qui s'étendent chacune entre un sommet du toit (104, 113) et un flanc de dent (106, 112), les surfaces en pan de toit (109) des dents de la denture d'embrayage (122) de la roue d'embrayage (116) étant de forme sphérique au moins dans une partie de surface en pan de toit (111), **caractérisé en ce que** les parties de surface en pan de toit (111) de forme sphérique sont réalisées sous la forme de segments d'ellipse aboutissant aux flancs de la dent (112) et aboutissent sans rebord vers le sommet du toit (113) dans des parties de surface en pan de toit planes (110).

2. Embrayage selon la revendication 1, qui est muni d'au moins une bague de synchronisation (123) disposée entre le manchon coulissant (119) et la roue d'embrayage (116) et muni d'une denture d'arrêt (121) pour rapprocher les vitesses de rotation du manchon coulissant (119) et de la roue d'embrayage (116), **caractérisé en ce que** les surfaces en pan de toit des dents de la denture d'arrêt (121) de la bague de synchronisation (123) sont chacune de forme sphérique au moins dans une partie de surface en pan de toit.

3. Embrayage selon l'une des revendications 1 à 2, **caractérisé en ce que** les dents (102) de la denture interne (120) du manchon coulissant (119) présentent des surfaces en pan de toit (105) plates.

4. Embrayage selon l'une des revendications 1 à 3, **caractérisé en ce que** les dents (101) de la denture d'embrayage (122) de la roue d'embrayage (116) se resserrent au niveau des flancs de la dent (112) dans le sens axial en direction du sommet du toit (113).

5. Roue d'embrayage (116) d'un embrayage (114) selon l'une des revendications 1 à 4, **caractérisée en ce que** les surfaces en pan de toit (109) des dents de la denture d'embrayage (122) de la roue d'embrayage (116) sont de forme sphérique au moins dans une partie de surface en pan de toit (111).

6. Dispositif de changement de vitesses et de synchronisation, en particulier boîte de vitesses d'un véhicule à moteur, avec un embrayage selon l'une des revendications 1 à 5.

7. Boîte de vitesses d'un véhicule à moteur avec un arbre d'entraînement et un arbre de sortie et avec au moins une paire de roues engrenées disposées entre les deux arbres, dans lequel une roue de la paire de roues peut être embrayée comme une roue d'embrayage avec un embrayage selon l'une des revendications 1 à 4.
